# EUROPÄISCHE PATENTANMELDUNG

(11) **EP 2 735 816 A1**
(43) Veröffentlichungstag der Anmeldung: **28.05.2014**
(21) Anmeldenummer: 12194504.2
(22) Anmeldetag: 27.11.2012
(51) Int. Cl.: F24J 2/52, E04H 12/22

(54) **Verfahren zur Aufstellung von Rammpfosten für Freiland-Solaranlagen, und Rammpfostensystem für selbige**

(71) Anmelder: Abakus Solar AG, 45886 Gelsenkirchen (DE)
(72) Erfinder: Kreul, Stephan, 45149 Essen (DE)
(74) Vertreter: Eisenführ Speiser

(57) **Zusammenfassung**

Die Erfindung betrifft ein Verfahren zur Aufstellung von Rammpfosten (7) für eine Freiland-Solaranlage (100). Das Verfahren umfasst insbesondere die Schritte: Bereitstellen eines Rammpfostens (7) mit einem vorbestimmten Querschnittsprofil, Bereitstellen eines Druckstempels (3) mit einem vorbestimmten Querschnittsprofil, wobei das Querschnittsprofil des Druckstempels (3) derart an das Querschnittsprofil des Rammpfostens (7) angepasst ist, dass der Druckstempel (3) an dem Rammpfosten (7) entlang gleiten kann, Eintreiben des Rammpfosten (7) in einen Bodenabschnitt hinein, vorzugsweise bis auf eine vorbestimmte Tiefe, Koppein des Druckstempels (3) mit dem Rammpfosten(7), und Eintreiben des Druckstempels (3) in gekoppeltem Zustand den Bodenabschnitt hinein.

Die Erfindung betrifft ferner ein Rammpfostensystem und dessen Verwendung, sowie eine Freiland-Solaranlage.

## Beschreibung

Die Erfindung betrifft ein Verfahren zur Aufstellung von Rammpfosten für Freiland-Solaranlagen, und ein Rammpfostensystem für solche Freiland-Solaranlagen.

Auf dem Gebiet der Solaranlagentechnik existieren verschiedene Aufstellkonzepte. Grundsätzlich bekannt sind einerseits die Installation von Solaranlagen auf Dächern von Gebäuden oder Carports, oder an Hauswänden, wozu entsprechende Unterkonstruktionen bzw. Tragstrukturen verwendet werden. Im Gegensatz zu diesen gebäudegebundenen Aufstellarten gibt es andererseits Bedarf nach der Aufstellung von Solaranlagen bzw. Solarparks auf Freiflächen. Hierzu werden entsprechende Tragstrukturen für die Solaranlagen auf den vorgesehenen Freiflächen aufgestellt. Auf diesen Tragstrukturen werden sodann die entsprechenden Solarmodule und erforderlichen Komponenten montiert. Sofern die vorgesehenen Freiflächen eine Bodenbeschaffenheit aufweisen, die ein Einrammen von den zum Tragen der Solarmodule vorgesehenen Rammpfosten ermöglichen, wird ein solches Aufstellverfahren für die Solaranlagen im Allgemeinen bevorzugt, da darauf verzichtet werden kann, mit höherem Fertigungsaufwand beispielsweise Betonfundamente oder ähnliches zu installieren, und auch eine geringere Umweltbelastung zu erwarten ist.

Je nach Bodenbeschaffenheit ist ein mehr oder weniger großer (mechanischer) Arbeitsaufwand notwendig, um die Rammpfosten auf eine erforderliche Tiefe in den Boden einzutreiben. Die Bodenbeschaffenheit im Zusammenspiel mit den von den Rammpfosten aufzunehmenden Kräften in vertikaler und horizontaler Richtung bestimmen hierbei die notwendige Eindringtiefe des Rammpfostens in den Bodenabschnitt. Hierbei ist zu beachten, dass unterschiedliche Kraftaufnahmen in vertikaler Richtung zu beachten sind für den Fall, dass die vertikal abwärts gerichtete Kraft eine andere ist als die "abhebende", vertikal nach oben gerichtete Kraftaufnahme. Um die Rammpfosten möglichst tief in den Bodenabschnitt eintreiben zu können, dürfen diese eine bestimmte Querschnittsfläche nicht überschreiten, müssen aber gleichzeitig aufgrund der erforderlichen Rammpfostenlänge eine Mindeststeifigkeit aufweisen, die das Aufbringen hoher Druckkräfte zum Eintreiben in den Bodenabschnitt ermöglicht und zur Aufnahme der in den Rammpfosten eingeleiteten Querkräfte eingerichtet ist. Ein aus dem Stand der Technik bekanntes Problem wird in der Aufnahme der vertikalen, nach unten in den Bodenabschnitt hinein gerichteten Kräfte gesehen. Bekannte Verfahren zur Aufstellung von Freiland-Solaranlagen und bekannte Rammpfostensysteme neigen je nach Bodenbeschaffenheit unterschiedlich stark dazu, im Lauf der Zeit unter Kraftbeaufschlagung insbesondere, aber nicht ausschließlich von Schnee und Wind nachzugeben und nach unten in den Bodenabschnitt abzusacken. Um dem entgegenzuwirken, hat man bislang die Anzahl der Rammpfosten bei der Aufstellung der Anlagen erhöht, die Abstände zwischen benachbarten Rammpfosten verringert, und die Länge der Rammpfosten vergrößert, um unter Berücksichtigung statischer Berechnungen das Risiko des Absackens zu verringern und im besten Fall auszuschließen. Der hiermit verbundene logistische, materialtechnische und arbeitsmäßige Aufwand wird als Nachteil empfunden.Der Erfindung lag somit die Aufgabe zugrunde, ein Verfahren der eingangs bezeichneten Art aufzuzeigen, welches eine effizientere, insbesondere kostengünstigere und zeiteffizientere Aufstellung der Solaranlage ermöglicht.

Die Erfindung löst die ihr zugrunde liegende Aufgabe bei einem Verfahren der eingangs bezeichneten Art durch die Schritte:
- Bereitstellen eines Druckstempels mit einem vorbestimmten Querschnittsprofil, wobei das Querschnittsprofil des Druckstempels an das Querschnittsprofil des Rammpfostens angepasst ist, vorzugsweise derart, dass der Druckstempel an dem Rammpfosten entlang gleiten kann, ohne zu verkanten,
- Eintreiben des Rammpfosten in einen Bodenabschnitt hinein, vorzugsweise bis auf eine vorbestimmte Tiefe,
- Koppeln des Druckstempels mit dem Rammpfosten, und
- Eintreiben des Druckstempels in gekoppeltem Zustand den Bodenabschnitt hinein.

Die Erfindung macht sich hierbei insbesondere die Erkenntnis zunutze, dass durch die Verwendung eines Druckstempels und Eintreiben des Druckstempels in gekoppeltem Zustand mit dem Rammpfosten in den Bodenabschnitt eine signifikante Verfestigung des unterhalb des Druckstempels befindlichen Bodenreiches bewirkt. Aus diesem Verfestigungsvorgang ergeben sich insbesondere die folgenden Vorteile: Durch das Verfestigen des Erdreiches unterhalb des Druckstempels wird der Rammpfosten im Erdreich zusätzlich stabilisiert und versteift. Durch die Verfestigung wird die mögliche Kraftaufnahme des Rammpfostens in allen Richtungen, insbesondere auch vertikal in Eintreibrichtung erhöht. Dies verringert das Risiko des Absackens des Rammpfostens nach unten (in Eintreibrichtung) im Vergleich zu herkömmlichen Rammpfosten und erhöht so die Standfestigkeit des Rammpfostens, so dass für die gleiche Kraftaufnahme in vertikaler und horizontaler Richtung eine geringere Eindringtiefe des Rammpfostens in das Erdreich ausreichend ist. Die vergrößerte Standfestigkeit der erfindungsgemäßen Rammpfostenaufstellung bewirkt ferner auch, dass bei einer Freiland-Solaranlage, die mit dem erfindungsgemäßen Verfahren aufgestellt wird, vergleichsweise höhere Abstände zwischen benachbarten Rammpfosten vorgesehen werden können. Je größer die zulässigen Abstände zwischen den Rammpfosten gewählt werden können, desto weniger Rammpfosten werden insgesamt pro Solarmodulfläche für eine Solaranlage auf der Freifläche benötigt. Dies birgt signifikante wirtschaftliche Einsparpotenziale bei der Betrachtung insbesondere großflächiger Freiland-Solaranlagen.

Die Erfindung wird gemäß einer ersten bevorzugten Ausführungsform dadurch weitergebildet, dass der Druckstempel in gekoppeltem Zustand fest mit dem Rammpfosten verbunden ist, und gemeinsam mit dem Rammpfosten in den Bodenabschnitt eingetrieben wird. Gemäß dieser Ausführungsform wird in einem einzigen Arbeitsschritt das Eintreiben des Rammpfostens und das Verfestigen des Bodenreiches mittels des Druckstempels erreicht. Dazu wird der Druckstempel vorzugsweise in einer vordefinierten Position mit dem Rammpfosten gekoppelt und an diesem befestigt, sodass der Rammpfosten beim Eintreiben zunächst eine definierte Eindringtiefe erreicht, bevor der Druckstempel in Kontakt mit dem Bodenabschnitt gelangt. Nach In-Kontakt-Bringen des Druckstempels (in gekoppeltem Zustand) mit dem Bodenabschnitt erfolgt sodann eine Verfestigung und Verpressung des Bodenabschnitts unterhalb des Druckstempels für eine gewisse Reststrecke, in der auch der Druckstempel mitsamt dem Rammpfosten in den Bodenabschnitt eingetrieben wird. Solange der Druckstempel noch nicht fest mit dem Rammpfosten verbunden ist, ist er vorzugsweise mittels Verschieben an dem Rammpfosten in die zum Eintreiben vorgesehene Position bringbar.

Gemäß einer bevorzugten alternativen Ausgestaltung der Erfindung wird der Druckstempel im Anschluss an das Eintreiben des Rammpfostens eingetrieben, und gleitet während des Eintreibens in einem Innenabschnitt des Rammpfostens oder außen an dem Rammpfosten entlang. Auch in dieser Ausführungsform wird der Druckstempel mit dem Rammpfosten gekoppelt, nämlich in den Innenabschnitt des Rammpfostens oder außen an dem Rammpfosten, wird aber erst in das Bodenreich eingetrieben, wenn der Rammpfosten schon in seiner voraussichtlichen Endposition in den Bodenabschnitt eingetrieben ist.

Vorzugsweise werden der Druckstempel und/oder der Rammpfosten unter Kraftbeaufschlagung mindestens soweit in den Bodenabschnitt eingetrieben, bis ein vorbestimmter Mindestwert der Kraftaufnahme erreicht ist. |_{[HB1]} Besonders bevorzugt werden, bei Verwendung mehrerer Rammpfosten, die Rammpfosten nach Erreichen der vorgeschriebenen Eindringtiefe im Bodenabschnitt noch um so viel weiter in den bodenabschnitt eingetrieben, dass die "Köpfe", also die dem eingetriebenen Ende gegenüberliegenden Abschnitte der Rammpfosten, fluchtend ausgerichtet sind, d.h. auf einer gemeinsamen Höhe liegen.

Die Bestimmung der von dem oder den Rammpfosten aufzunehmenden Kräfte in vertikaler und horizontaler Richtung werden im Vorfeld der Aufstellung mittels statischer Berechnungen auf allgemein bekannte Weise vorgenommen. Mittels repräsentativer Rammversuche wird sodann vorzugsweise unter Verwendung bekannter Kraftmesstechnik ermittelt, wie groß die Eindringtiefe vor Ort am jeweiligen Bodenabschnitt gewählt werden muss, damit die vorab berechneten Kräfte aufgenommen werden können. Hieraus ergibt sich der vorbestimmte Mindestwert der Kraftaufnahme.

Das Eintreiben des Rammpfostens und/oder des Druckstempels wird vorzugsweise mittels einer Eintreibeinrichtung vorgenommen. Als Eintreibeinrichtung wird bzw. werden vorzugsweise ein oder mehrere Rammen eingesetzt. Rammen sind beispielsweise aus dem Straßenbau oder Tiefbau bekannt.

Die Erfindung betrifft ferner ein Rammpfosten-System für eine Freiland-Solaranlage. Die Erfindung löst die ihr zugrunde liegende Aufgabe bei einem Rammpfosten-System der vorstehend bezeichneten Art, in dem das Rammpfosten-System mindestens einen Rammpfosten mit einem vorbestimmten Querschnittsprofil, und mindestens einen Druckstempel mit einem vorbestimmten Querschnittsprofil aufweist, wobei das Querschnittsprofil des Druckstempels an das Querschnittsprofil des Rammpfostens angepasst ist, vorzugsweise derart, dass der Druckstempel an dem Rammpfosten entlang gleiten kann, ohne zu verkanten, wobei der Rammpfosten in einen Bodenabschnitt eintreibbar ist, und wobei der Druckstempel mit dem Rammpfosten koppelbar und in gekoppeltem Zustand in den Bodenabschnitt hineintreibbar ist. Das erfindungsgemäße Rammpfostensystem ist insbesondere zur Verwendung in dem erfindungsgemäßen Verfahren ausgebildet. Dementsprechend erreicht das erfindungsgemäße Rammpfostensystem die gleichen Vorteile wie das erfindungsgemäße Verfahren, weswegen diesbezüglich auf die vorstehenden Ausführungen verwiesen wird. Das Rammpfostensystem und das Verfahren gemäß der Erfindung haben ferner die gleichen bevorzugten Ausführungsformen, so dass auch diesbezüglich auf die jeweiligen Beschreibungsteile verwiesen wird.

Das Rammpfostensystem gemäß der Erfindung wird insbesondere dadurch weitergebildet, dass der Rammpfosten ein Querschnittsprofil aufweist, mit mehreren Profilflanken, zwischen welchen ein Innenabschnitt ausgebildet ist, wobei der Innenabschnitt zur Aufnahme des Druckstempels angepasst ist. Das vorzugsweise offene Querschnittsprofil ist insbesondere derart gebildet, dass ein länglicher Blechkörper, der aus einem oder mehreren Blechteilen besteht, mehrfach abgekantet wird, wodurch mehrere, durch Abkantungen voneinander getrennte Flankenbereiche ausgebildet sind. Die zueinander angewinkelten Flankenbereiche begrenzen den Innenabschnitt des Querschnittsprofils des Rammpfostens, wobei vorzugsweise eine Seite des Querschnittsprofils offen bleibt. Alternativ wird ein geschlossenes Querschnittsprofil vorgeschlagen, beispielsweise als Hohlprofil. Dem leicht erhöhten Aufwand, um bei einem geschlossenen Profil eine Positionierung des Druckstempels am Rammpfosten vorzunehmen, steht eine erhöhte Steifigkeit des Rammpfostens gegenüber.

Gemäß einer weiteren bevorzugten Ausführungsform des Rammpfostensystems weist der Innenabschnitt im Bereich seiner Öffnung eine lichte Weite auf, die geringer als die maximale lichte Weite des Innenabschnitts ist. Unter der lichten Weite wird hierbei der Abstand zwischen zwei gegenüberliegenden, von der Öffnung des Profils jeweils gleich weit beabstandeten Punkten des Querschnitts verstanden. Mit anderen Worten wird die lichte Weite vorliegend als parallel zu der Ebene ausgerichtet verstanden, in welcher sich die Öffnung erstreckt.

Vorzugsweise weist das Querschnittsprofil des Rammpfostens zwei gegenüberliegende Flanken auf, die in Richtung der Öffnung aufeinander zulaufen. Diese in Richtung der Öffnung verjüngte Ausgestaltung der gegenüberliegenden Flanken des Querschnittsprofils führt zu einer Hinterschneidung auf beiden Seiten des Querschnittsprofils. Hierdurch wird insbesondere bewirkt, dass bei einem in dem Innenabschnitt des Rammprofils gekoppelten Druckstempels das Erdreich im Inneren des Innenabschnitts verfestigt wird, und durch die Hinterschneidung das Ausweichen in seitlicher Richtung des Erdreichs aus dem Rammprofil erschwert wird.

Vorzugsweise weist das Querschnittsprofil eine Ω-Form auf.

Weiter vorzugsweise weist der Druckstempel ein Querschnittsprofil auf, welches einer abschnittsweisen oder vollständigen Negativform des Innenabschnitts entspricht. Hierdurch wird vorzugsweise ein Formschluss zwischen Druckstempel und Querschnittsprofil derart ermöglicht, dass der Druckstempel zwar in Richtung senkrecht zum Querschnitt des Rammpfostens in dem Innenabschnitt entlanggleiten kann, allerdings ein seitliches Ausweichen des Druckstempels erschwert, oder im Fall, dass Hinterschneidungen ausgebildet sind, sogar verhindert wird.

In einer weiteren bevorzugten Ausführungsform weist der Druckstempel ein Querschnittsprofil auf, welches einer abschnittsweisen oder vollständigen Negativform des Querschnittsprofils des Rammpfostens entspricht. Hierdurch wird eine Negativform (abschnittsweise oder vollständig) des Außen-Profils des Rammpfostens im Druckstempel nachgebildet, damit sich dieser in gekoppeltem Zustand außen um den Rammpfosten zumindest abschnittsweise herumlegen kann. Der Druckstempel ist vorzugsweise dazu eingerichtet, in gekoppeltem Zustand den Rammpfosten zu umschließen, insbesondere kragenartig, und dass den Rammpfosten umgebende Erdreich zu verpressen. Alternativ zu einer Verpressung im Innenabschnitt des Rammpfostens ist hierdurch alternativ oder zusätzlich eine Verpressung des Erdreiches ermöglicht, welche sich außen um den Rammpfosten herum erstreckt.

Insbesondere wird als vorteilhaft angesehen, wenn der Druckstempel entweder im Innenabschnitt des Rammpfostens mittels einer oder mehrerer Hinterschneidungen oder durch Umschließen des Rammpfostens entlang dessen Außenfläche relativ zum Rammpfosten positionierbar ist. Hierdurch wird sichergestellt, dass der Rammpfosten in gekoppeltem Zustand gegen Relativbewegung in Querrichtung gesichert ist, und somit unverlierbar im Erdreich mit dem Rammpfosten verbunden bleibt.

Gemäß einer weiteren bevorzugten Ausführungsform der Erfindung weist der Rammpfosten an seiner Oberfläche abschnittsweise oder vollständig einen höheren Reibkoeffizienten entgegen der Eintreiberichtung als in Eintreibrichtung auf. Die Erhöhung des Reibkoeffizienten ist vorzugsweise an der dem Innenabschnitt abgewandten, also im Erdreich nach außen zeigenden Oberfläche des Rammpfostens vorgesehen. Die Erhöhung des Reibkoeffizienten wird vorzugsweise durch Aufrauhen der Oberfläche, durch Vorsehen einer Schuppung gegen die Auszugsrichtung, des Anbringens von Lamellen oder Widerhaken gewährleistet. Alternativ oder zusätzlich zu den vorstehend beschriebenen Ausführungen des Druckstempels weist dieser in einer weiteren vorteilhaften Ausgestaltung an einer Seitenfläche, die sich in montiertem Zustand des Druckstempels in dem Rammpfosten seitlich von dem Rammpfosten fort erstreckt, einen oder mehrere Vorsprünge auf. Der oder die Vorsprünge weisen vorzugsweise in seitlicher Richtung eine größere Oberfläche als in Eintreibrichtung auf. Hierdurch wird die Kraftaufnahme des Rammpfostensystems in horizontaler Richtung, quer zur Eintreibrichtung vergrößert. Der oder die Vorsprünge sind vorzugsweise als Rippen ausgebildet.

Die Erfindung betrifft ferner eine Freiland-Solaranlage, welche insbesondere durch Anwendung des Verfahrens gemäß einer der vorstehend beschriebenen bevorzugten Ausführungsformen aufstellbar ist. Die Freiland-Solaranlage weist ein Rammpfosten-System mit einem oder mehreren Rammpfosten auf, einer oder mehreren an den Rammpfosten befestigten Konstruktionen zur Halterung eines oder mehrerer Solarmodule, und einem oder mehreren von der Konstruktion bzw. den Konstruktionen gehalterten Solarmodulen.

Die Erfindung löst die ihr zugrunde liegende Aufgabe bei einer solchen Freiland-Solaranlage insbesondere dadurch, dass das Rammpfostensystem nach einer der vorstehenden beschriebenen bevorzugten Ausführungsformen ausgebildet ist.

Die Freiland-Solaranlage vereint ebenso wie das erfindungsgemäße Rammpfosten-System auch die Vorteile des erfindungsgemäßen Verfahrens in sich, weswegen diesbezüglich auf die vorstehenden Ausführungen Bezug genommen wird.

Die Erfindung betrifft ferner die Verwendung eines Druckstempels zur Verfestigung des Standes eines Rammpfostens in einem Bodenabschnitt. Der Rammpfosten ist insbesondere Bestandteil eines Rammpfosten-Systems gemäß einer der vorstehend beschriebenen bevorzugten Ausführungsformen. Die Verfestigung des Standes eines solchen Rammpfostens wird vorzugsweise mittels eines Verfahrens gemäß einer der vorstehenden beschriebenen bevorzugten Ausführungsformen vorgenommen. Der für die erfindungsgemäße Verwendung vorgesehene Druckstempel und der Rammpfosten weisen ein vorbestimmtes Querschnittsprofil auf, wobei das Querschnittsprofil des Druckstempels an das Querschnittsprofil des Rammpfosten angepasst ist, vorzugsweise derart dass der Druckstempel an dem Rammpfosten entlanggleiten kann, ohne zu verkanten, der Rammpfosten in den Bodenabschnitt eintreibbar ist, und der Druckstempel mit dem Rammpfosten koppelbar und in gekoppeltem Zustand in den Bodenabschnitt hineintreibbar ist.

Hinsichtlich der Vorteile der erfindungsgemäßen Verwendung wird auf die zuvor beschriebenen Vorteile bezüglich des erfindungsgemäßen Verfahrens und des vorstehend beschriebenen erfindungsgemäßen Rammpfostensystems bezuggenommen.

Der hier beschriebene Rammpfosten wird vorzugsweise zur Aufstellung einer Freiland-Solaranlage verwendet. Die aus der Verwendung resultierende Freiland-Solaranlage ist vorzugsweise eine Freiland-Solaranlage gemäß einer der hierin beschriebenen bevorzugten Ausführungsformen.

Im Folgenden wird die Erfindung anhand eines bevorzugten Ausführungsbeispiels und unter Bezugnahme auf die beigefügten Figuren näher beschrieben. Hierbei zeigen:
- Figur 1: eine schematische Seitenansicht einer Freiland-Solaranlage gemäß einem bevorzugten Ausführungsbeispiel der Erfindung,
- Figur 2: eine schematische räumliche Ansicht eines Teils der Freiland-Solaranlage aus Figur 1,
- Figur 3: eine Seitenansicht der Freiland-Solaranalage gemäß den Figuren 1 und 2,
- Figur 4: eine Detailansicht eines Druckstempels für das Rammpfostensystem der Freiland-Solaranlage gemäß dem bevorzugten Ausführungsbeispiel, und
- Figuren 5a-c: verschiedene Querschnitts- bzw. Seitenprojektionsansichten eines Details der Freiland-Solaranlage gemäß Figur 1.

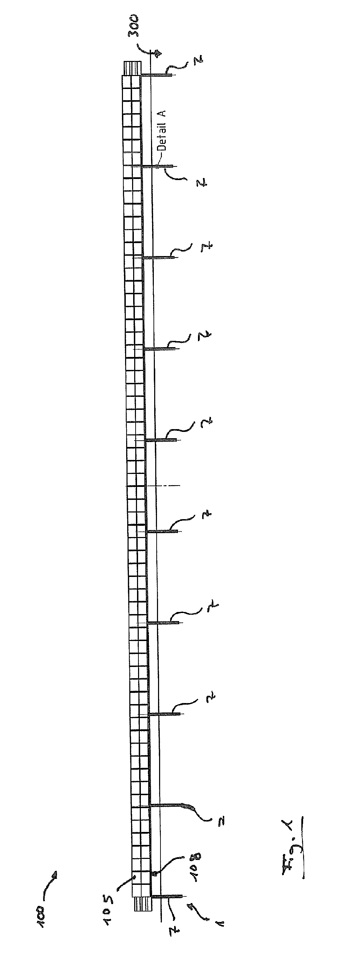

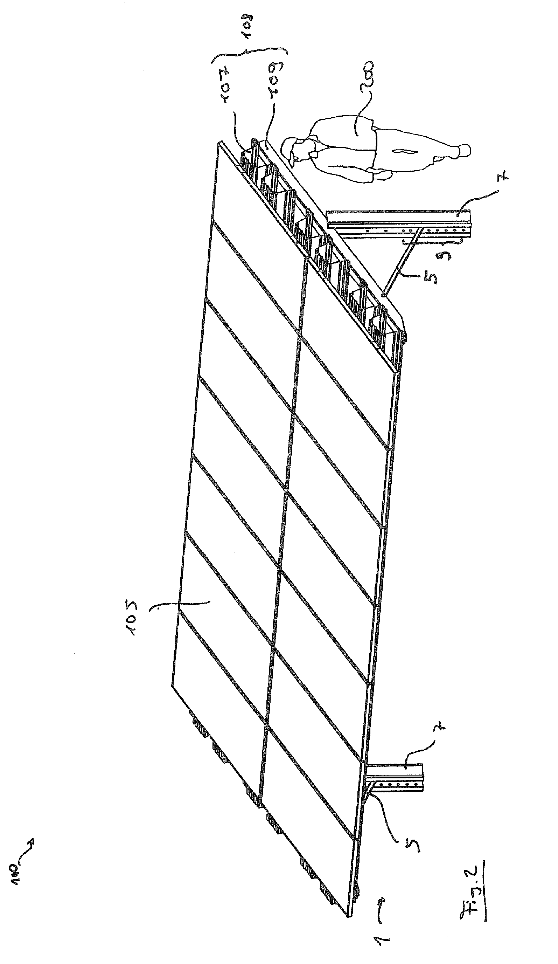

In Figur 1 ist eine Freiland-Solaranlage 100 schematisch in einer Seitenansicht dargestellt. Die Freiland-Solaranlage 100 (im Folgenden: Solaranlage) weist einen Rammpfostensystem 1 auf. Das Rammpfostensystem 1 weist gemäß Ausführungsbeispiel von Figur 1 eine Vielzahl von Rammpfosten 7 auf. An den Rammpfosten 7 ist jeweils eine Tragstruktur 108 (Figur 2) angebracht, mittels welcher eine Vielzahl von Solarmodulen 105 gehaltert werden.

Die Rammpfosten 7 der Solaranlage 100 sind jeweils bis auf eine vorbestimmte Tiefe in einen Bodenabschnitt 300 eingetrieben worden, wodurch der Solaranlage 100 ein fester Stand verliehen worden ist.

In Figur 2 ist ein Ausschnitt der Solaranlage 100 in einer schematischen räumlichen Darstellung gezeigt. Eine Mehrzahl von Solarmodulen 105 ist auf einer Tragstruktur 108 gehaltert, welche eine Mehrzahl von Querprofilen 107 und wenigstens zwei Tragstreben 109 aufweist. Die Solarmodule 105 sind mittels der Tragstruktur 108 mit zwei Rammpfosten 7 des Rammpfostensystems 1 verbunden. Die Tragstruktur 108 ist mittels jeweils einer Stützstrebe 5 gegen den Rammpfosten 7 an beiden Seiten abgestützt (die Anzahl der Stützstreben kann auch variieren). An dem Rammpfosten 7 ist eine Vielzahl von Ausnehmungen 9, vorzugsweise in Form von Bohrungen, vorgesehen. Mittels Auswahl der gewünschten Bohrungen an dem Rammpfosten 7 ist die Stellung der Stützstrebe 5 wählbar, wodurch der Schrägungswinkel der Solarmodule 105 auf der Tragstruktur 108 eingestellt werden kann. Wie aus Figur 2 zu erkennen ist, ist jeder der Rammpfosten 7 soweit in den Boden eingetrieben, dass er etwas weniger als mannshoch aus dem Erdreich hervorsteht, angedeutet durch die Personensilhouette 200.

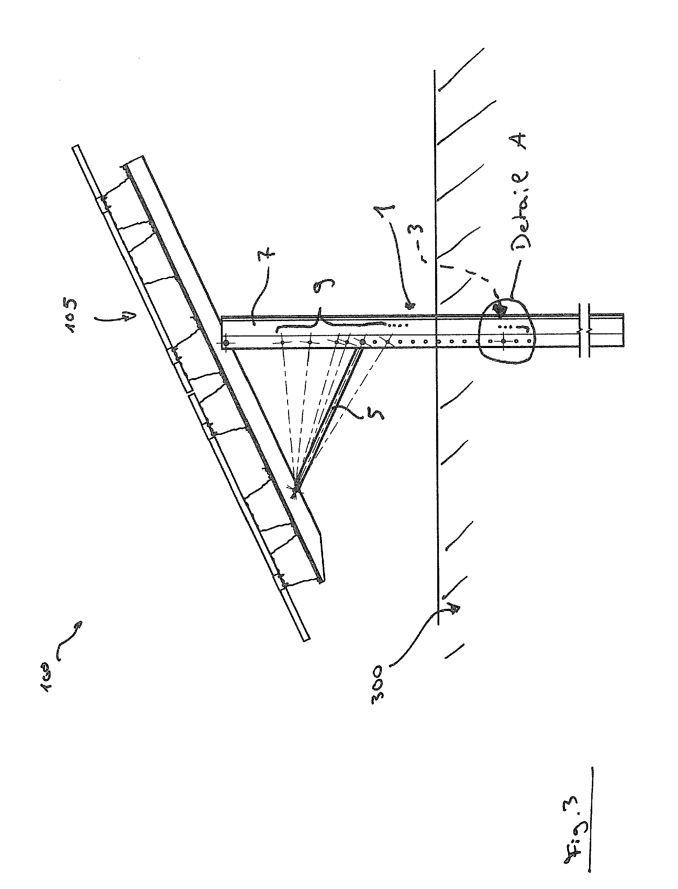

Figur 3 zeigt den Blick von der Seite auf die erfindungsgemäße Solaranlage 100 mit dem erfindungsgemäßen Rammpfostensystem 1, wobei eine Querschnittsansicht in das Innere des Bodenabschnitts 300 freigegeben ist. Der Rammpfosten 7 ist soweit in den Bodenabschnitt 300 eingetrieben, dass ein Bereich, in welchem ein Druckstempel mit dem Rammpfosten 7 verbunden ist, unterhalb der Erdoberfläche angeordnet ist. Der Druckstempel ist in dem Bereich angeordnet, welcher in Figur 3 mit "Detail A" ausgewiesen ist.

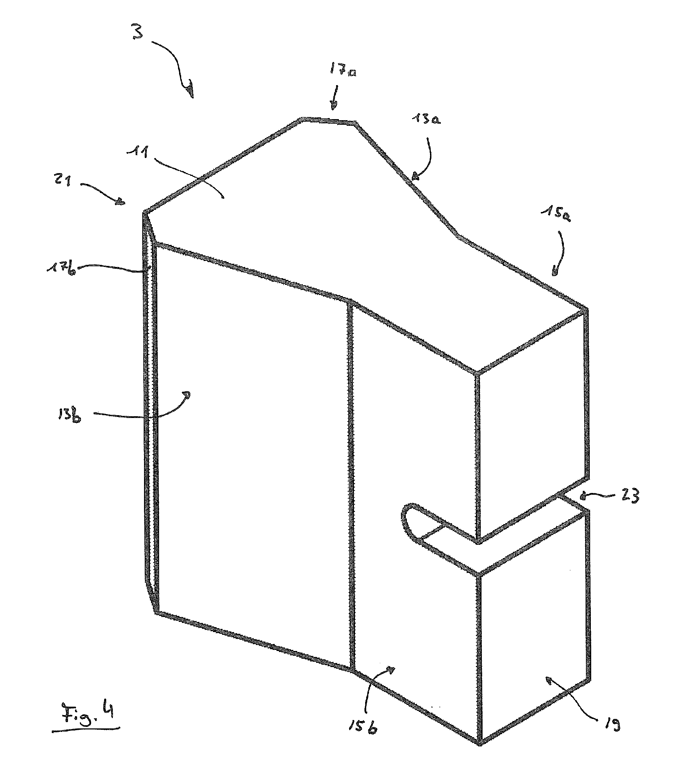

Figur 4 zeigt einen solchen, in aufgestelltem Zustand der Rammpfosten 7 unterirdisch positionierten Druckstempel 3, der auch in Figur 3 mittels einer Strichlinie angedeutet ist. Der Druckstempel gibt vorzugsweise die Querschnittsfläche des Innenabschnitts, insbesondere geringfügig gegenüber dieser verkleinert, eines Rammpfostens 7 wieder und ist innerhalb des Rammpfostens mit diesem verriegelbar.

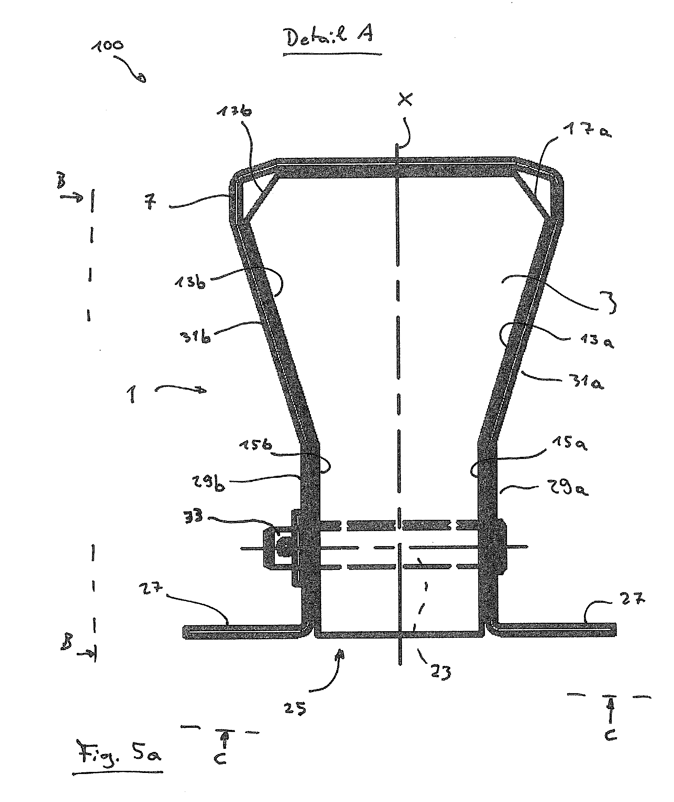

Der Druckstempel 3 weist einen Grundkörper 11 auf. An dem Grundkörper 11, der im Wesentlichen zu einer Symmetrieebene X spiegelsymmetrisch ausgebildet ist (siehe Figur 5a), sind zwei gegenüberliegende Flanken 13a, 13b ausgebildet, die aufeinander in Richtung einer Stirnfläche 19 verjüngt zulaufen. Die Flächen 13a,b münden in zwei zueinander parallele gegenüberliegende Flanken 15a, 15b, welche sich bis hin zur Stirnfläche 19 erstrecken. Der in Figur 4 gezeigte Druckstempel ist dazu eingerichtet, mit der Stirnfläche 19 proximal zu einer Öffnung 25 des Querschnittsprofils des Rammpfostens 7 hin ausgerichtet zu werden und sich innerhalb des Innenabschnitts, der durch das Querschnittsprofil des Rammpfostens 7 gebildet wird, zu erstrecken (siehe Figur 5a). Zwischen den aufeinander zulaufenden Flanken 13a, 13b und einer der der ersten Stirnfläche 19 gegenüberliegenden zweiten Stirnfläche 21 sind zwei Fasen 17a, 17b ausgebildet.

Wie sich aus Figur 5a deutlich zeigt, dienen die Fasen 17a, 17b dazu, eine Ausnehmung zwischen dem Druckstempel 3 und dem Rammpfosten 7 auszubilden, wenn der Druckstempel 3 sich in mit dem Rammpfosten 7 gekoppeltem Zustand befindet. Es ist insbesondere der Eck-Bereich, in dem das Querschnittsprofil des Rammpfostens 7 mehrfach gekantet ist, freigelassen. Hierdurch ist ein höherer Gestaltungsspielraum bei dem Ausgestalten der Umkantungen gegeben, ist es für die Funktionsweise des Druckstempels 3 in Verbindung mit dem Rammpfosten 7 nicht zwingend notwendig, dass der Druckstempel 3 eine vollständige Negativform des Innenabschnitts des Rammpfostens 7 darstellt. Wie hier gezeigt, ist eine lediglich abschnittsweise Negativform unter Aussparung der durch die Fasen 17a, 17b gebildeten Eckbereiche eine abschnittweise Negativform darstellt.

Das Querschnittsprofil des Rammpfostens 7 weist an der Seite der Öffnung 25 des Profils zwei im Wesentlich parallel, besonders bevorzugt koplanar angeordnete Kragen 27 auf. Von den Kragen 27 aus erstrecken sich zwei gegenüberliegende (bezüglich der Achse X) Flanken 29a, 29b, die parallel zu den Flanken 15a, 15b des Druckstempels ausgerichtet sind. Im Bereich der jeweils parallelen, sich gegenüberliegenden Flanken 15a,b; 29a,b weist der Druckstempel 3 eine Ausnehmung 23 auf (siehe auch Figur 4). In gemäß Figur 5a dargestelltem Zustand ist der Druckstempel 3 mit dem Rammpfosten 7 durch Einführen in Längsrichtung des Rammpfostens gekoppelt und ferner durch Einführen eines Verriegelungsstifts 33 durch eine der Ausnehmungen 9 und die Ausnehmung 23 hindurch an dem Rammpfosten befestigt. Aufgrund der sich aneinanderschmiegenden, jeweils gegenüberliegenden Flanken 13a,b; 31a,b ist der Druckstempel selbst in Abwesenheit des Verriegelungsstifts 33 quer zur Längsrichtung des Rammpfostens 7 unverlierbar in diesem gekoppelt.

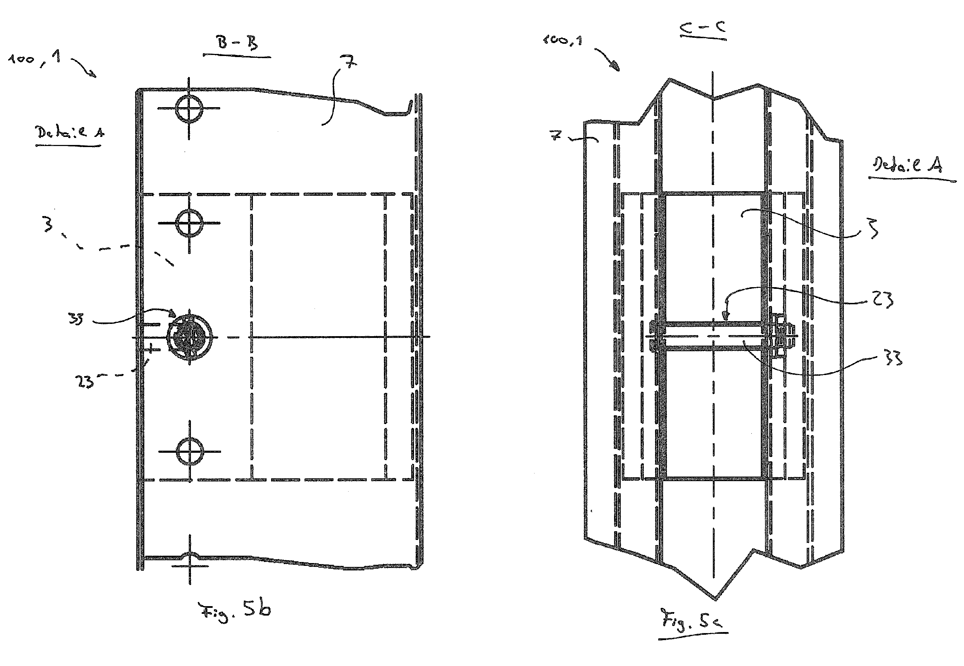

Die Figuren 5b und c verdeutlichen erneut die Positionierung des Druckstempels 3 innerhalb des Rammpfostens 7. Wir der Verriegelungsstift 33 aus der Ausnehmung 23 herausbewegt, lässt sich der Druckstempel in der Höhe bzw. entlang der Längsrichtung des Rammpfostens 7 verschieben (axial bezüglich der Längsrichtung des Rammpfostens) und beispielsweise an einer anderen Stelle, an welcher ebenfalls eine entsprechende Ausnehmung der Ausnehmungen 9 vorgesehen ist, wieder am Rammpfosten befestigen.

Nachfolgend wird unter Bezugnahme auf die vorstehende Figurenbeschreibung das erfindungsgemäße Verfahren in einer bevorzugten Ausführungsform näher erläutert. Zunächst wird zum Aufstellen einer Freiland-Solaranlage 100 mindestens einer, vorzugsweise mehrere Rammpfosten 7 eines Rammpfostensystems 1 bereitgestellt. Der oder die Rammpfosten 7 werden sodann in eine für die Aufstellung der Freiland-Solaranlage 100 notwendige Ausrichtung zum Bodenabschnitt 300 gebracht. Vorzugsweise beträgt der Winkel zur Senkrechten auf dem Bodenabschnitt zwischen 0° und 30°, je nach Aufstellerfordernis.

Ferner wird für mindestens einen der Rammpfosten 7, vorzugsweise aber mehrere oder sämtliche der Rammpfosten 7 jeweils ein Druckstempel 3 bereitgestellt. Der Druckstempel wird vorzugsweise in Längsrichtung des Rammpfostens 7 mit diesem gekoppelt, also an einer der Endpositionen eingefädelt, und erforderlichenfalls an einer gewünschten Position mittels eines oder mehrerer Befestigungselemente wie beispielsweise einem Verriegelungsstift 33 und mehrerer korrespondierender Ausnehmungen 9 in dem Rammpfosten 7 fixiert.

Sodann wird der bzw. werden die Rammpfosten 7 mitsamt dem Druckstempel 3 in den Bodenabschnitt 300 hineingetrieben. Zunächst wird bedingt durch die Position des Druckstempels 3 im Rammpfosten 7 nur der Rammpfosten 7 in den Bodenabschnitt 300 hineingetrieben, bis der Druckstempel auf Höhe der Oberfläche des Bodenabschnitts 300 anlangt. Bei fortgesetztem Eintreiben wird zusätzlich zum Rammpfosten 7 auch der Druckstempel 3 eingetrieben. Beim Eintreiben des Druckstempels 3 in den Bodenabschnitt 300 wird das unter dem Druckstempel 3 liegende Erdreich verfestigt, wodurch es zu einer Stabilisierung des Rammpfostens 7 und somit zu einer Erhöhung der Widerstandskräfte kommt, die erforderlich sind, um den Rammpfosten im Bodenabschnitt 300 in horizontaler Richtung oder in vertikaler Richtung (nach oben und/oder unten) zu bewegen. Je größer die Verfestigung des Bodenabschnitts unterhalb des Druckstempels 3 ist, desto höher sind die Kräfte, die zum Bewegen des Rammpfostens jeweils aufgewendet werden müssen.

Nach dem Eintreiben des oder der Rammpfosten 7 mindestens auf eine Eindringtiefe, die ausreichend ist, um die erforderlichen Kräfte aufzunehmen, und gleichzeitig eine ausreichende Höhe aufweist, um die Tragstruktur 108 zum Haltern der Solarmodule 105 an den Rammpfosten 107 anzubringen, wird in einer bevorzugten Weiterbildung das Eintreiben eines oder mehrerer der Rammpfosten soweit fortgesetzt, bis die Köpfe der Rammpfosten zueinander fluchtend ausgerichtet sind. Im Anschluss daran das Eintreiben gestoppt, und die Montage der Tragstruktur 108 vorgenommen.

Hierzu werden erforderlichenfalls die Schrägungswinkel der Tragstruktur 108 bzw. der Solarmodule 105 durch entsprechendes Anlenken der Stützstreben 5 zwischen Tragstrebe 109 und Rammpfosten 7 justiert. Schließlich (optional auch bereits vor dem Montieren der Tragstruktur 108) werden die Solarmodule 105 auf die entsprechenden Querprofile 107 montiert und die Solaranlage durch Anschließen der entsprechenden elektrischen Komponenten betriebsbereit gemacht.

Aufgrund der erhöhten Standfestigkeit der Rammpfosten 7, die mittels Druckstempeln 3 im Bodenabschnitt 300 verankert sind, ist es möglich, eine im Vergleich zu bekannten Anlagen vergrößerten Abstand zwischen benachbarten Rammpfosten 7 einzuhalten, wodurch für Solaranlagenaufsteller eine größere Einsparung auftritt, je größer die Solarmodul- Fläche ist, welche einem einzelnen Rammpfosten zugeordnet ist.

## Patentansprüche

1. Verfahren zur Aufstellung von Rammpfosten (7) für eine Freiland-Solaranlage (100),
umfassend die Schritte:
- Bereitstellen eines Rammpfostens (7) mit einem vorbestimmten Querschnittsprofil,
- Bereitstellen eines Druckstempels (3) mit einem vorbestimmten Querschnittsprofil, wobei das Querschnittsprofil des Druckstempels (3) an das Querschnittsprofil des Rammpfostens (7) angepasst ist, vorzugsweise derart, dass der Druckstempel (3) an dem Rammpfosten (7) entlang gleiten kann, ohne zu verkanten,
- Eintreiben des Rammpfosten (7) in einen Bodenabschnitt hinein, vorzugsweise bis auf eine vorbestimmte Tiefe,
- Koppeln des Druckstempels (3) mit dem Rammpfosten(7), und
- Eintreiben des Druckstempels (3) in gekoppeltem Zustand den Bodenabschnitt hinein.

2. Verfahren nach Anspruch 1,
wobei der Druckstempel (3) in gekoppeltem Zustand fest mit dem Rammpfosten (7) verbunden ist, und gemeinsam mit dem Rammpfosten (7) in den Bodenabschnitt eingetrieben wird.

3. Verfahren nach Anspruch 1,
wobei der Druckstempel (3) im Anschluss an das Eintreiben des Rammpfostens (7) eingetrieben wird und während des Eintreibens in einem Innenabschnitt des Rammpfostens (7) oder außen an dem Rammpfosten (7) entlang gleitet.

4. Verfahren nach einem der vorstehenden Ansprüche,
wobei der Druckstempel (3) in dem Innenabschnitt des Rammpfostens (7) mit diesem gekoppelt wird, oder außen an dem Rammpfostens (7) mit diesem gekoppelt wird.

5. Verfahren nach einem der vorstehenden Ansprüche,
wobei der Druckstempel (3) und/oder der Rammpfosten (7) unter Kraftbeaufschlagung soweit in den Bodenabschnitt eingetrieben wird, bis ein vorbestimmter Mindestwert der Kraftaufnahme erreicht ist.

6. Verfahren nach einem der vorstehenden Ansprüche,
wobei das Eintreiben des Rammpfostens (7) und/oder des Druckstempels (3) mittels einer Eintreibeinrichtung vorgenommen werden.

7. Rammpfostensystem (1) für eine Freiland-Solaranlage (100), mit
- mindestens einem Rammpfosten (7) mit einem vorbestimmten Querschnittsprofil, und
- mindestens einem Druckstempel (3) mit einem vorbestimmten Querschnittsprofil, wobei das Querschnittsprofil des Druckstempels (3) an das Querschnittsprofil des Rammpfostens (7) angepasst ist, vorzugsweise derart, dass der Druckstempel (3) an dem Rammpfosten (7) entlang gleiten kann, ohne zu verkanten,
wobei der Rammpfosten (7) in einen Bodenabschnitt eintreibbar ist, und wobei der Druckstempel (3) mit dem Rammpfosten (7) koppelbar und in gekoppeltem Zustand in den Bodenabschnitt hinein treibbar ist.

8. System (1) nach Anspruch 7,
wobei der Rammpfosten (7) ein Querschnittsprofil aufweist mit mehreren Profilflanken (27, 29, 31), zwischen welchen ein Innenabschnitt ausgebildet ist, wobei der Innenabschnitt zur Aufnahme des Druckstempels (3) angepasst ist.

9. System nach Anspruch 8,
wobei der Innenabschnitt im Bereich seiner Öffnung (25) eine lichte Weite aufweist, die geringer als die maximale lichte Weite des Innenabschnitts ist.

10. System (1) nach Anspruch 9,
wobei das Querschnittsprofil zwei gegenüberliegende Flanken (31a,b) aufweist, die in Richtung der Öffnung auf einander zulaufen.

11. System nach einem der Ansprüche 8 bis 10,
wobei der Druckstempel (3) ein Querschnittsprofil aufweist, welches einer abschnittsweisen oder vollständigen Negativform des Innenabschnitts entspricht.

12. System nach einem Ansprüche 7 bis 11,
wobei der Druckstempel (3) ein Querschnittsprofil aufweist, welches einer abschnittsweisen oder vollständigen äußeren Negativform des Querschnittsprofils des Rammpfostens (7) entspricht.

13. System nach einem der Ansprüche 7 bis 12,
wobei der Rammpfosten (7) an seiner Oberfläche abschnittsweise oder vollständig einen höheren Reibkoeffizienten entgegen der Eintreibrichtung als in Eintreibrichtung aufweist.

14. Freiland-Solaranlage (100), mit
- einem Rammpfostensystem (1) mit mehreren Rammpfosten (7),
- einer oder mehreren an den Rammpfosten (7) befestigten Konstruktionen zur Halterung eines oder mehrerer Solarmodule (105), und
- einem oder mehreren von der oder den Konstruktionen gehalterten Solarmodulen (105),
**dadurch gekennzeichnet, dass** das Rammpfostensystem (1) nach einem der Ansprüche 8 bis 14 ausgebildet ist.

15. Verwendung eines Druckstempels (3) zur Verfestigung des Standes eines Rammpfostens (7) in einem Bodenabschnitt, wobei der Druckstempel (3) und der Rammpfosten (7) ein vorbestimmtes Querschnittsprofil aufweisen, das Querschnittsprofil des Druckstempels (3) an das Querschnittsprofil des Rammpfostens (7) angepasst ist, vorzugsweise derart, dass der Druckstempel (3) an dem Rammpfosten (7) entlang gleiten kann, ohne zu verkanten, der Rammpfosten (7) in den Bodenabschnitt eintreibbar ist, und der Druckstempel (3) mit dem Rammpfosten (7) koppelbar und in gekoppeltem Zustand in den Bodenabschnitt hinein treibbar ist.
